# EUROPÄISCHE PATENTSCHRIFT

(11) **EP 1 174 020 B1**
(45) Veröffentlichungstag und Bekanntmachung des Hinweises auf die Patenterteilung: **30.03.2005**
(21) Anmeldenummer: 01115146.1
(22) Anmeldetag: 22.06.2001
(51) Int. Cl.: A01F 29/22

(54) **Schleifvorrichtung**
Sharpening device
Dispositif d'affûtage

(30) Priorität: 22.07.2000 DE 10035743
(43) Veröffentlichungstag der Anmeldung: 23.01.2002
(73) Patentinhaber: DEERE & COMPANY, Moline, Illinois 61265-8098 (US)
(72) Erfinder: Johnson, Stanley Jerome, Cedar Falls,IA 50613 (US); Clauss, Steffen, Dr., 66509 Rieschweiler-Mühlbach (DE)
(74) Vertreter: Holst, Sönke, Dr.

(56) Entgegenhaltungen:
- EP-A- 0 335 332
- DE-C- 19 903 153
- FR-A- 2 676 612
- FR-A- 2 683 975

## Beschreibung

Die Erfindung betrifft eine Schleifvorrichtung, mit einem Schleifstein zum Schleifen mindestens eines Messers einer Häckseleinrichtung, einer Bewegungseinrichtung zum Bewegen des Schleifsteins entlang des Messers, einer Messeinrichtung zur Bereitstellung eines Signals, das eine Information über die Form der Schneidkante des Messers in der Bewegungsrichtung des Schleifsteins enthält, und einer Steuerung, die die Bewegungseinrichtung in Abhängigkeit von dem von der Messeinrichtung bereitgestellten Signal steuert.

In der DE 40 23 114 A wird ein Verfahren zum Feststellen der Schärfe von Häckselmessern beschrieben, bei dem die Schärfe der Häckselmesser durch einen an die Schleifvorrichtung angebauten magnetischen Geber gemessen wird. Durch Bewegen der Schleifvorrichtung mit dem daran angebauten Geber quer zur Häckseltrommel kann die Schärfe der Häckselmesser über die Breite der Häckseltrommel gemessen werden. Die mittels des Gebers gemessenen Werte dienen dazu, den Bediener des Feldhäckslers zu informieren, wenn die Häckselmesser geschliffen werden müssen.

Die DE 199 03 153 C schlägt vor, den Verschleißzustand einzelner Häckselmesser durch die Messung der Belastung der Gegenschneide entgegen der Flussrichtung des Gutstroms und quer zur Flussrichtung des Gutstroms zu erfassen. Falls der gemessene Verschleißzustand auf stumpfe Messer hinweist, wird dem Benutzer eine entsprechende Information gegeben bzw. selbsttätig der Gutfluss gestoppt oder die Gegenschneide verstellt oder ein Schleifvorgang eingeleitet.

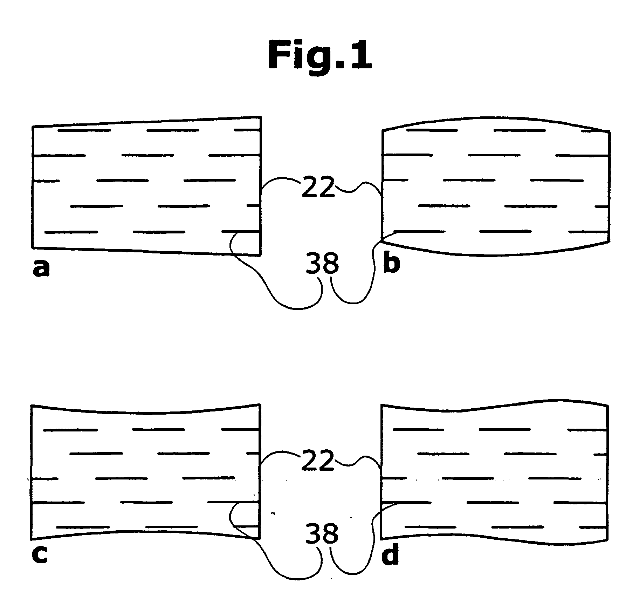

Beim Betrieb eines Feldhäckslers nutzen sich die an der Häckseltrommel befestigten Messer mit der Zeit ab. Es ist möglich, dass einzelne Messer unterschiedlich stark verschleißen. Während sich die Messer über den Umfang der Häckseltrommel in der Regel näherungsweise gleichmäßig abnutzen, kann die Abnutzung über die Breite der Häckseltrommel sehr unterschiedlich sein. Somit kann der Durchmesser des von den Schneidkanten der Messer beschriebenen Hüllkreises in axialer Richtung der Welle der Häckseltrommel variieren. Zur Illustration wird auf die Figur 1 verwiesen, in der dargestellt ist, dass statt einer angestrebten zylindrischen oder geringfügig konkaven Form der Schneidkanten der Messer 38 der Häckseltrommel 22 die dargestellten konischen (a), konvexen (b), konkaven (c) oder unregelmäßigen Formen (d) entstehen können. Eine zylindrische oder leicht konkave Form wird angestrebt, um ein automatisches Einstellen der Gegenschneide zu vereinfachen oder je nach Einstellsystem erst möglich zu machen. Eine parallele und exakte Zustellung der Gegenschneide zum Umfang der Häckseltrommel ist für einen effektiven Häckselprozess unabdingbar.

Bei bekannten Schleifvorrichtungen sind keine Möglichkeiten vorgesehen, die in Figur 1 dargestellten Abweichungen von der zylindrischen Form der Häckseltrommel beim Schleifvorgang auszugleichen, ohne die Häckseltrommel manuell zu vermessen und anschließend hinreichend weit abzuschleifen.

In der FR 2 683 975 A wird ein Feldhäcksler mit einer Schleifeinrichtung beschrieben, deren Schleifstein durch einen Mikroprozessor gesteuert wird. Der Schleifstein wird zunächst zugestellt und dann durch paralleles Verfahren der Schleifvorrichtung entlang der Messer geschliffen. Beim Schleifen wird das Schleifgeräusch erfasst. Falls ein bestimmter Signalpegel unterschritten wird, wird selbsttätig nochmals der Schleifstein zugestellt. Hier wird selbsttätig eine zylindrische Form der Häckseleinrichtung erzielt; andere Formen sind aber nicht herstellbar.

Das der Erfindung zugrunde liegende Problem wird darin gesehen, eine verbesserte Schleifvorrichtung bereitzustellen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, die Bewegungseinrichtung des Schleifsteins derart zu steuern, dass die Schneidkante des Messers der zu schleifenden Häckseleinrichtung in eine Sollform gebracht wird. Dabei wird die jeweilige (reale) Ist-Form der Schneidkante des Messers berücksichtigt. Eine Steuerung erhält ein Signal, das von einer Messeinrichtung bereitgestellt wird und eine Information über die aktuelle Form des Messers oder der Messer enthält. Die Bewegungseinrichtung des Schleifsteins wird von der Steuerung derart gesteuert, dass der Schleifstein die Schneidkante des Messers in eine bestimmte Sollform bringt, bei der es sich um eine vorbestimmte Form oder um eine unter mehreren Vorgaben auswähl- bzw. beliebig eingebbare Sollform handeln kann. Um die Sollform der Schneidkante des Messers zu erreichen, führt die Steuerung einen Vergleich zwischen der von der Messeinrichtung bereitgestellten Information über die Ist-Form der Schneidkante und der Sollform durch und steuert die Bewegungseinrichtung in Abhängigkeit vom Ergebnis des Vergleiches. Im Rahmen des erfindungsgemäßen Gedankens kann die Steuerung dabei auf verschiedene Arten arbeiten.

Auf diese Weise erreicht man eine Verbesserung der Schleifqualität. Durch ein einfaches, weil selbsttätiges (Wieder-) Herstellen der gewünschten Sollform der Schneidkante des Messers ist eine einfachere und genauere Einstellung der Position der Gegenschneide möglich.

Einerseits wäre denkbar, zuerst die Ist-Form der Schneidkante abzufragen und dann die Bewegungseinrichtung in Abhängigkeit vom Unterschied zwischen der Sollform und der Ist-Form zu steuern. Es wird somit zuerst (a priori) festgestellt, wieviel Material wo abzuschleifen ist, und dann ein entsprechendes Schleifen durchgeführt. Dabei sind der Steuerung Signale der Messeinrichtung für die gesamte Breite der Häckseleinrichtung zuzuführen, was durch Abtasten der Breite der Häckseleinrichtung erfolgen kann. Aus diesen Signalen kann die Steuerung eine Information darüber ableiten, wie weit das Messer abzuschleifen ist, um die Sollform zu erhalten.

Andererseits kann ein fortwährender Vergleich zwischen der Sollform und der Ist-Form erfolgen. Es wird somit fortlaufend (a posteriori) überprüft, ob die Sollform erreicht wurde, und der Schleifvorgang entsprechend fortgesetzt, bis das Ziel - die Sollform - erreicht ist. Vorzugsweise wird der Steuerung eine Information über den Radius des Hüllkreises des jeweils vom Schleifstein bearbeiteten Bereichs der Häckseleinrichtung zugeführt. Die Häckseleinrichtung wird in diesem Fall so lange mit dem Schleifstein bearbeitet, bis das Signal der Messeinrichtung über die Breite der Häckseleinrichtung wenigstens näherungsweise auf die gewünschte Sollform hindeutet.

Ein Vorteil der letztgenannten Vorgehensweise liegt darin, dass beim Messvorgang weniger Genauigkeit vonnöten ist, da es nur darum geht, die hergestellte Form der Schneidkante mit der Sollform zu vergleichen. Es sind daher nur relative Werte zu erfassen. Beim erstgenannten Verfahren sind hingegen absolute Werte über den Betrag des abzutragenden Materials erforderlich, so dass die Messeinrichtung genauer arbeiten muss.

Bei der Häckseleinrichtung kann es sich um eine Häckseltrommel in offener oder geschlossener Form handeln, an der mehrere Messer angebracht sind. Die Häckseltrommel ist auf einer Welle angeordnet, die beim Schleifen in Rotation versetzt wird und sich in der Regel gegenüber dem normalen Häckselbetrieb in Gegenrichtung dreht. Die Messeinrichtung erfasst bei derartigen Häckseltrommeln eine Information über den Abstand zwischen der Welle und den Schneidkanten der Messer, also über den Radius des von den Schneidkanten beschriebenen Hüllkreises. Diese Information kann einem absoluten oder einem relativen Wert entsprechen. Ein relativer Wert ist beispielsweise der Abstand zwischen den Schneidkanten der Messer und einer Gegenschneide oder einem Schleifstein, während der Radius des Hüllkreises der Schneidkanten ein absoluter Wert ist. Die Erfindung kann aber auch an Häckseleinrichtungen von Scheibenradhäckslern Verwendung finden. Dort wird nicht der Radius der Schneidkanten der Messer erfasst, sondern ihre axiale Position.

Als Sollform der Schneidkanten der Messer kommt primär eine zur Welle der Häckseltrommel parallele Schneidkante, bzw. eine über die Breite der Häckseltrommel betrachtet leicht konkave Form der Schneidkanten in Betracht. Anzumerken ist, dass nur die Form der Schneidkante vorgegeben ist, jedoch nicht der (absolute) Abstand von der Welle der Häckseltrommel, der bei jedem Schleifvorgang geringer wird. Bei Scheibenradhäckslern wird die Sollform in der Regel eine zur Welle orthogonale Schneidkante sein.

Vorzugsweise wird eine den Schleifstein über die Breite der Häckseleinrichtung transportierende und/oder ihn ihr zustellende Bewegungseinrichtung von der Steuerung in Abhängigkeit von dem Signal der Messeinrichtung gesteuert und bewegt den Schleifstein so, dass Abweichungen in der Form der Schneidkanten der Messer selbsttätig ausgeglichen werden.

Es sind verschiedene Möglichkeiten denkbar, den Schleifstein in Abhängigkeit von dem Signal der Messeinrichtung über die Breite der Häckseltrommel zu verfahren.

Einerseits kann die Bewegungseinrichtung den Schleifstein in zeitlich nicht linearer Weise über die Häckseleinrichtung verfahren. Der Schleifstein wird um so länger an einer Stelle stehen gelassen (oder um so langsamer bewegt), je weiter der Hüllkreis der Schneidkanten der Messer von der Welle entfernt ist. Der Schleifstein kann insbesondere so lange an einer Stelle stehen gelassen werden, bis der gewünschte Hüllkreisdurchmesser erzielt wurde, bzw. sich ein bestimmtes Ausgangssignal der Messeinrichtung ergibt. Anschließend wird der Schleifstein weiter bewegt.

Andererseits kann die Bewegungseinrichtung den Schleifstein kontinuierlich über die Breite der Häckseleinrichtung bewegen, bis ein konstanter bzw. gewünschter Radius des Hüllkreises der Messer erzielt ist. Ob dieser Radius erzielt wurde, ist anhand des von der Messeinrichtung bereitgestellten Signals feststellbar. Dabei kann der Schleifstein zunächst in seiner ursprünglichen radialen Position verbleiben, also nicht zugestellt werden. Alternativ wird der Schleifstein bereits anfangs in die Stellung zugestellt, die dem gewünschten Radius des Hüllkreises der Schneidkanten der Messer entspricht, oder er wird während des Schleifens sukzessive zugestellt. Denkbar ist auch, dass die Bewegungseinrichtung den Schleifstein nicht über die gesamte Breite der Häckseltrommel verfährt, sondern nur in den Bereichen, in denen wegen eines relativ großen Radius des Hüllkreises der Schneidkanten der Messer ein Abschleifen erforderlich ist. Die verbleibenden Bereiche können nicht oder relativ schnell überstrichen werden, um die Schleifzeit zu verkürzen.

Nach den beschriebenen Schleifvorgängen ist die Sollform - vorzugsweise eine zylindrische oder leicht konkave Form - des Hüllkreises der Schneidkanten der Messer erzielt. Es ist aberinsbesondere dort, wo der Radius bereits anfangs relativ klein war, und deshalb kein oder nur wenig Material abgetragen wurde - nicht unbedingt gewährleistet, dass alle Schneidkanten hinreichend geschärft sind. Daher wird vorgeschlagen, dass der Schleifstein der Häckseleinrichtung zugestellt wird, wenn über die gesamte Breite der Häckseleinrichtung ein der Sollform entsprechender Radius des Hüllkreises der Messer erreicht wurde, und der normale Schleifvorgang fortgeführt wird, bei dem ein Überstreichen der Häckseltrommel mit dem Schleifstein und ein Zustellen des Schleifsteins sowie ein abschließendes Schlichten erfolgt, um hinreichend scharfe Messer zu erhalten.

Die Steuereinrichtung kann außerdem ein Fehlersignal bereitstellen, falls die Schneidkante eines Messers einen von der Messeinrichtung erfassten Abstand von der Welle der Häckseltrommel aufweist bzw. über die Schneidkante der anderen Messer um eine Länge übersteht, der bzw. die über einem Schwellenwert liegt. Dieses Fehlersignal kann einem Bediener optisch oder akustisch zur Anzeige gebracht werden und weist auf ein zu weit nach außen überstehendes Messer hin.

Die Messeinrichtung kann den Abstand zwischen dem Schleifstein und einem sich am Schleifstein vorbeibewegenden Messer erfassen. Dazu kann wie in der DE 40 23 114 A ein magnetischer oder induktiver Geber Verwendung finden, oder ein Klopfsensor. Wenn der Schleifstein mit den Messern in Kontakt kommt, induzieren die dabei entstehenden Vibrationen Spannungen in den Klopfsensoren. Wenn der Schleifstein mit einer hohen Kraft gegen die Häckseltrommel gedrückt wird, wird das dabei entstehende Schleifgeräusch laut sein und der Klopfsensor wird eine hohe Spannung bereitstellen. Wenn die Schleifkraft reduziert wird, wird sich die Spannung verringern, bis der Schleifstein überhaupt keinen Kontakt mehr mit den Messern hat. Auf diese Weise können die vom Klopfsensor bereitgestellten Spannungen als Anzeige für den Kontakt bzw. den Abstand zwischen dem Schleifstein und den Schneidkanten der Messer der Häckseltrommel verwendet werden.

Die Messeinrichtung kann auch einen an der Gegenschneide angebrachten Sensor umfassen. Es kann ein Klopfsensor, ein magnetisch arbeitender Sensor oder ein Kraftsensor Verwendung finden. Um der Steuerung eine Information zuzuführen, welches Messer jeweils mit der Gegenschneide zusammenwirkt, kann ein weiterer Sensor die Drehstellung der Häckseltrommel erfassen, die mit dem jeweils an der Gegenschneide vorbeilaufenden Messer korreliert. Ist bekannt, welches Messer sich an der Gegenschneide befindet, ist auch seine axiale Position bekannt.

Die vorliegende Erfindung ist an einer Vielzahl von Einrichtungen mit zu schärfenden Messern verwendbar. Sie kann insbesondere an selbstfahrenden oder gezogenen Erntemaschinen mit Häckseltrommeln oder Scheibenradhäckslern benutzt werden.

In den Zeichnungen sind zwei nachfolgend näher beschriebene Ausführungsbeispiele der Erfindung dargestellt. Es zeigt:
- Fig. 1: schematische Ansichten von Häckseltrommeln mit Messern mit unterschiedlichen Formen,
- Fig. 2: eine Erntemaschine mit einer Häckseltrommel mit Schleifvorrichtung in Seitenansicht und in schematischer Darstellung,
- Fig. 3: eine Vorderansicht einer ersten Ausführungsform einer Schleifvorrichtung,
- Fig. 4: ein Flussdiagramm, das einen Schleifvorgang illustriert,
- Fig. 5: ein Flussdiagramm, das einen anderen Schleifvorgang illustriert, und
- Fig. 6: eine Vorderansicht einer zweiten Ausführungsform einer Schleifvorrichtung.

Die Figur 1 ist bereits weiter oben erläutert worden, so dass sich hier eine weitere Beschreibung erübrigt.

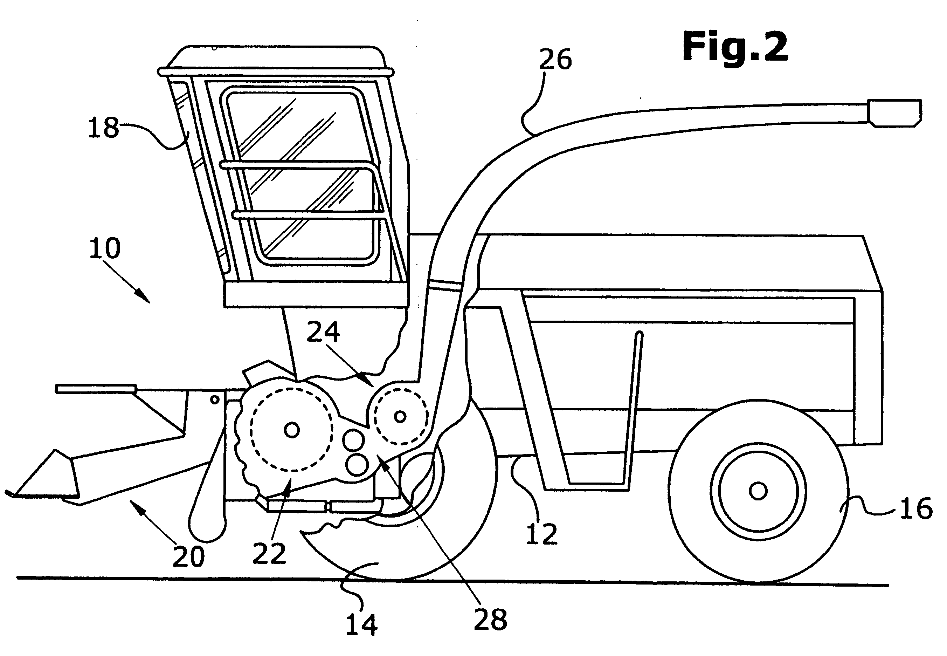

Die in Figur 2 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über einen drehbaren Austragsschacht 26. Zwischen der Häckseltrommel 22 und der Fördervorrichtung 24 erstreckt sich (zur Maisernte) eine Nachzerkleinerungsvorrichtung 28, durch die das zu fördernde Gut der Fördervorrichtung 24 tangential zugeführt wird.

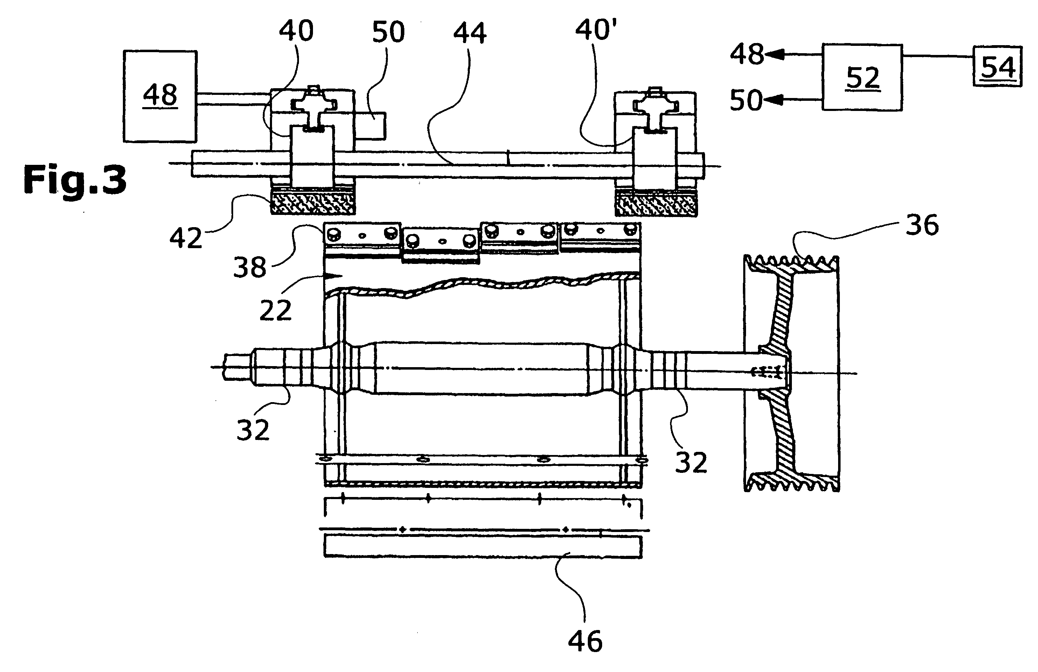

In Figur 3 ist schematisch eine Ansicht einer Häckseltrommel 22 und einer ihr zugeordneten Schleifvorrichtung wiedergegeben, wie sie sich bei einer Betrachtung der Erntemaschine 10 in Figur 1 (bezüglich der Bewegungsrichtung) von vorn ergibt. Die Häckseltrommel 22 weist eine Anzahl über ihre Breite und ihren Umfang verteilter Messer 38 auf, die in Zusammenwirken mit einer starren Gegenschneide 46 durch die Erntegutaufnahmeeinrichtung 20 aufgenommenes Erntegut zerteilen. Die Häckseltrommel 22 umfasst eine zentrale Welle 32, die über eine stirnseitige Riemenscheibe 36 und nicht dargestellte Riemen durch einen Motor der Erntemaschine 10 rotativ antreibbar ist. Die Welle 32 stützt sich durch zwei beidseits der Häckseltrommel 22 angeordnete, in Figur 3 nicht eingezeichnete Lager am Rahmen 12 der Erntemaschine 10 ab.

Um nach einer bestimmten Betriebsdauer die Messer 38 schärfen zu können, ohne die einzelnen Messer 38 oder die gesamte Häckseltrommel 22 ausbauen zu müssen, ist oberhalb der Häckseltrommel 22 nahe des von den Messern 38 beschriebenen Hüllkreises eine Schleifvorrichtung vorgesehen, die im wesentlichen einen Schleifstein 42, eine diesem zugeordnete Schleifsteinhalterung 40 und eine Achse 44 umfasst, auf der die Schleifsteinhalterung 40 verschiebbar gelagert ist.

Sollen die Messer 38 geschärft werden, wird die Häckseltrommel 22 in Rotation versetzt, in der Regel in umgekehrter Drehrichtung und/oder mit reduzierter Drehzahl, verglichen mit normalem Häckselbetrieb. Die Schleifsteinhalterung 40 mit dem daran befestigtem Schleifstein 42 wird mittels einer Bewegungseinrichtung 48 aus einer (nicht eingezeichneten) Ruheoder Parkposition, in der sie seitlich neben der Häckseltrommel 22 angeordnet ist, über die gesamte Breite der Häckseltrommel 22 verschoben. Dabei ist die Unterseite des Schleifsteins 42 in Kontakt mit den Messern 38, und schärft sie. Beim Schleifvorgang wird der Schleifstein 42 mehrere Male über die Breite der Häckseltrommel 22 verfahren. Die Endpunkte dieser Verschiebebewegung sind in der Figur 3 durch die Schleifsteinhalterungen mit den Bezugsziffern 40 am linken Umkehrpunkt und 40' am rechten Umkehrpunkt dargestellt.

Zwischen den Verschiebebewegungen kann ein Zustellen des Schleifsteins 42 erfolgen, also eine geringfügige Bewegung des Schleifsteins 42 auf die Messer 38 zu. In der dargestellten Ausführungsform wird dazu ein mechanisches Element (Klinkenrad) verwendet, das bei Erreichen eines oder beider Umkehrpunkte der Schleifsteinhalterung 40 mit einem ortsfesten Element zusammenwirkt. Die Drehung des mechanischen Elements wird mittels eines Gewindes in eine Verschiebebewegung umgewandelt, so dass der Schleifstein 42 der Häckseltrommel 22 zugestellt wird. Durch eine Verschiebung des Schleifsteins 42 nur über einen eingeschränkten seitlichen Verschiebebereich kann ein Zustellen vermieden werden, da das mechanische Element dann nicht mit dem ortsfesten Element in Kontakt kommt. Ein derartiges Schleifen ohne Zustellen ist beim den Schleifvorgang abschließenden Schlichten zweckmäßig. Die Bewegungseinrichtung 48 der Schleifvorrichtung wird durch eine in Figur 3 schematisch wiedergegebene Steuerung 52 gesteuert, die sowohl die Verschiebung des Schleifsteins 42 durch die Bewegungseinrichtung 48, als auch - in der oben beschriebenen Weise - das Zustellen steuert. Die Steuerung 52 wird mit einer Information über die jeweilige Position des Schleifsteins 42 beaufschlagt, was über einen entsprechenden, in der Zeichnung nicht wiedergegebenen Sensor erfolgen kann, oder dadurch, dass der Steuerung 52 eine Information vorliegt, in welche Stellung sie die Bewegungseinrichtung 48 verbracht hat. Dazu kann beispielsweise die Anzahl der Impulse gespeichert werden, die an einen Schrittmotor der Bewegungseinrichtung 48 abgegeben wurden. Die Steuerung 52 kann außerdem den Antrieb der Häckseltrommel 22 steuern.

Anzumerken ist, dass das Zustellen auch durch einen separaten Motor, insbesondere einen Elektro- oder Hydraulikmotor bewirkt werden könnte, der ebenfalls mit der Steuerung 52 zu verbinden wäre. Anstelle eines Zustellens durch Verschieben des Schleifsteins 42 könnte auch die ganze Schleifsteinhalterung 40 zugestellt werden.

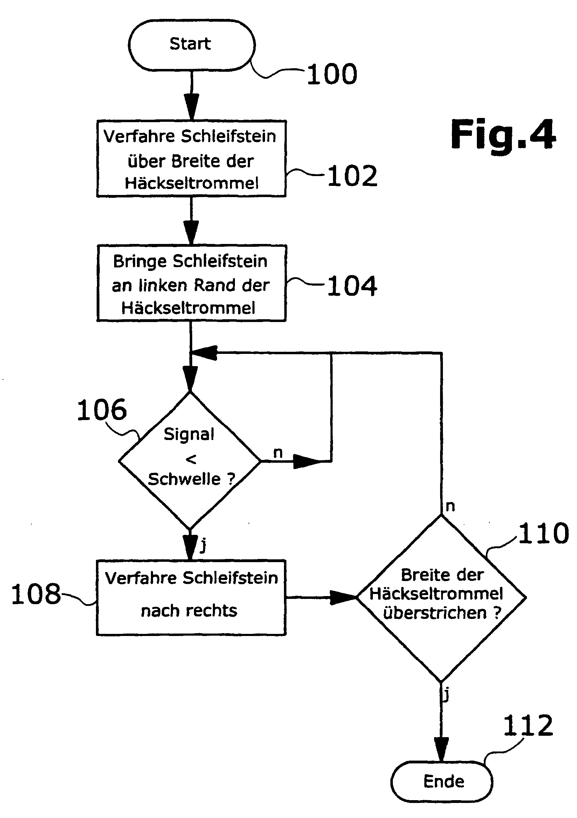

Die Steuerung 52 ist mit einem Speicher 54 und mit einem an der Schleifsteinhalterung 40 angebrachten, als Messeinrichtung dienenden Klopfsensor 50 verbunden. Ein Schleifvorgang läuft wie in Figur 4 dargestellt ab:

Zunächst veranlasst die Steuerung 52 nach dem Beginn des Schleifvorgangs (Schritt 100), dass der Schleifstein 42 in Schritt 102 durch die Bewegungseinrichtung 48 über die Breite der Häckseltrommel 22 verfahren und wieder zurück in die Ursprungsposition verfahren wird. Dabei kann der Schleifstein 42 in der Position verbleiben, in die er beim vorhergehenden Schleifvorgang gebracht wurde, oder ggf. demgegenüber zur Häckseltrommel 22 zugestellt werden. Schritt 102 kann dazu dienen, festzustellen, ob ein Zustellen des Schleifsteins 42 erforderlich ist. Das ist dann der Fall, wenn an wenigstens einer Stelle der Häckseltrommel 22 kein (oder ein relativ geringes) Signal vom Klopfsensor 50 erzeugt wird. In diesem Fall ist eine Delle, Einbuchtung oder dergleichen in den Messern 38, die ohne Zustellen nicht ausgeglichen werden kann. Schritt 102 kann auch entfallen, insbesondere wenn im Anschluss an ihn noch eine Kontrolle durchgeführt wird, ob der Schleifvorgang erfolgreich war.

Beim Überstreichen der Breite der Häckseltrommel 22 erzeugt der an der Schleifsteinhalterung 40 angebrachte Klopfsensor 50 ein Signal, das von dem Abstand der Schneidkanten der Messer 38 vom Schleifstein 42 abhängt. Die Steuerung 52 wird über einen geeigneten Analog/Digitalwandler mit einer Information über die Amplitude dieses Signals beaufschlagt.

Bei einer Häckseltrommel 22, die die in Figur 1(a) gezeigte Form hat, würde ein im folgenden als Abstandssignal bereichnetes Signal, das eine Information über den Abstand enthält, von links nach rechts absinken (dabei würde die Amplitude des vom Klopfsensor 50 abgegebenen Signals ansteigen). Bei der in Figur 1(b) gezeigten Häckseltrommel, die sich durch die Form des zugeführten Gutes oder übermäßige Verweilzeiten an den Enden der Verschiebebewegung des Schleifsteins 42 über die Breite der Häckseltrommel 22 ergeben kann, so dass die Messer 38 dort mehr abgeschliffen sind als in der Mitte, würde das Abstandssignal immer kleiner, je mehr sich der Schleifstein 42 der Mitte der Häckseltrommel 22 nähert. Ist die Form durch zu lange Verweilzeiten an den Enden der Häckseltrommel 22 bedingt, so dass sie beim Schleifen von der Steuerung 52 erkannt wird, können die im Speicher 54 abgelegten Verweilzeiten selbsttätig verkürzt werden. Die in Figur 1(c) gezeigte Form der Häckseltrommel 22 ergibt in der Mitte den größten Abstand, und die in Figur 1(d) einen unregelmäßig über die Breite variierenden Abstand. Die Form (c) kann durch zu kurze Verweilzeiten an den Enden der Häckseltrommel 22 bedingt sein. Wird sie durch die Steuerung 52 beim Schleifen erkannt, können die im Speicher 54 abgelegten Verweilzeiten selbsttätig verlängert werden. Die Formen (c) und (d) können aber durch ungleichmäßige Gutzufuhr oder eine defekte Gegenschneide 46 bedingt sein.

Bei dem in Figur 4 dargestellten Schleifvorgang wird der Schleifstein 42 zunächst nicht weiter zugestellt. Der Schleifstein 42 wird in Schritt 104 durch die Bewegungseinrichtung 48 in eine erste Position an der Häckseltrommel verbracht, in der Regel links oder rechts außen. Er verbleibt in dieser Position, bis der Klopfsensor 50 ein Ausgangssignal erzeugt, das einem gewünschten Abstand zwischen Welle 32 und Schneidkanten der Messer 38 entspricht, so dass eine hinreichende Schärfung der mit dem Schleifstein zusammenwirkenden Teile der Messer 38 erzielt ist. Daher wird in Schritt 106 abgefragt, ob das Signal des Klopfsensors 50 kleiner als ein Schwellenwert ist. Ist das Ergebnis nein, folgt Schritt 106, sonst Schritt 108. Dort wird der Schleifstein 42 durch die Bewegungseinrichtung 48 um eine seiner Breite entsprechenden Strecke weiter nach links oder rechts transportiert und schleift dort die Messer 38. Es folgt Schritt 110, in dem abgefragt wird, ob die Häckseltrommel 22 bereits über die gesamte Breite bearbeitet wurde. Wenn nein, folgt Schritt 106, sonst wird der Vorgang in Schritt 112 beendet. Der Schleifstein 42 bleibt somit immer an einer Stelle der Häckseltrommel 22 stehen, bis der Klopfsensor 50 jeweils das gewünschte Ausgangssignal liefert. Diese Vorgänge wiederholen sich, bis die gesamte Breite der Häckseltrommel 22 bearbeitet ist. Auf diese Weise erreicht man, dass die Häckseltrommel 22 in eine zylindrische Form gebracht wird. Bei einem Überfahren der Breite der Häckseltrommel 22 mit dem Schleifstein 42 würde man ein über die Breite der Häckseltrommel 22 konstantes Ausgangssignal des Klopfsensors 50 erhalten. Falls die Häckseltrommel 22 an einigen Stellen einen besonders kleinen Radius aufweist, so dass der Klopfsensor 50 keinen Kontakt zwischen den Messern 38 und dem Schleifstein 42 nachweist, kann ein Zustellen des Schleifsteins 42 und eine Wiederholung des Schleifvorgangs über die ganze Breite der Häckseltrommel 22 erfolgen. In der Regel wird der beschriebene Vorgang mit umkehrter Bewegungsrichtung des Schleifsteins 42 wiederholt und/oder mehrfach ausgeführt. Zum Abschluss des Schleifvorgangs kann in an sich bekannter Weise ein normales Schleifen und/oder Schlichten der gesamten Häckseltrommel 22 erfolgen. Schließlich wird der Schleifstein 42 in seine Parkposition verbracht.

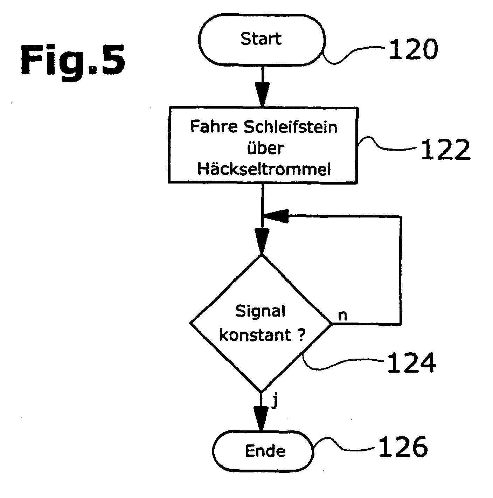

Ein dazu alternativer, in Figur 5 dargestellter Modus verläuft derart, dass der Schleifstein 42 über die gesamte Breite der Häckseltrommel 22 verfahren wird, bis ein konstanter Abstand zwischen Welle 32 und Schneidkanten der Messer 38 hergestellt ist. Die Steuerung 50 erkennt am Ausgangssignal des Klopfsensors 50, ob ein konstanter Abstand zwischen Welle 32 und Schneidkanten der Messer 38 erreicht wurde und dementsprechend der Schleifvorgang beendet werden kann. Auch in diesem Modus kann ein Zustellen des Schleifsteins 42 erfolgen, wenn an einer oder mehreren Stellen der Häckseltrommel 22 vom Klopfsensor kein Kontakt zwischen Schleifstein 42 und Messern 38 nachgewiesen wird. Der Schleifvorgang läuft daher so ab, dass nach dem Start in Schritt 120 der Schleifstein 42 in Schritt 122 über die Breite der Häckseltrommel 22 verfahren wird. In Schritt 124 wird überprüft, ob das Signal des Klopfsensors 50 konstant ist. Ist das nicht der Fall, folgt Schritt 122, sonst das Ende in Schritt 126.

Zur Erfolgskontrolle, bzw. da sich der Schleifstein 42 beim Schleifen abnutzt, was zu einem nicht befriedigenden Ergebnis des Schleifvorgangs führen kann, kann die Steuerung vor dem Schlichten bzw. einem sich anschließenden normalen Schleifvorgang noch einmal die Schleifsteinhalterung 40 über die Breite der Häckseltrommel 22 verfahren und durch den Klopfsensor 50 die Abstände zwischen Welle 32 und Schneidkanten der Messer 38 erfassen. Ist die dabei erfasste Form der Schneidkanten der Messer 38 nicht zufriedenstellend, erfolgt ein neuer Schleifvorgang in der oben beschriebenen Weise.

Zum Abschluss der beiden Schleifmodi kann in an sich bekannter Weise ein normales Schleifen und/oder Schlichten der gesamten Häckseltrommel 22 erfolgen.

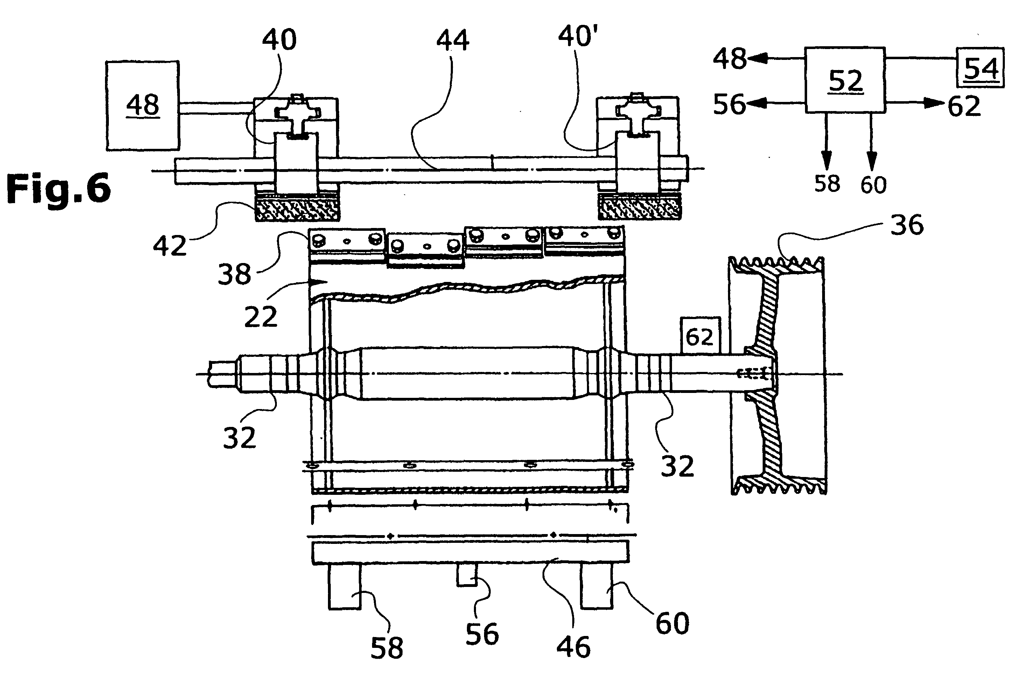

In Figur 6 ist eine zweite Ausführungsform einer erfindungsgemäßen Schleifvorrichtung wiedergegeben. Teilen, die denen der ersten Ausführungsform entsprechen, sind übereinstimmende Bezugszeichen zugeordnet. Ein Unterschied besteht bezüglich der Messeinrichtung, die anstelle des Klopfsensors 50 an der Schleifsteinhalterung 40 einen magnetisch arbeitenden Sensor 56 an der Gegenschneide 46 umfasst. Die Gegenschneide 46 ist durch Stellmotore 58, 60 relativ zur Häckseltrommel 22 bewegbar. Die Stellmotore 58, 60 werden von der Steuerung 52 vorzugsweise synchron angesteuert, um die Gegenschneide 46 in eine zum Häckselbetrieb geeignete Stellung zu verbringen. Der magnetisch arbeitende Sensor 56 stellt eine Information über den Abstand zwischen der Gegenschneide 46 und einer an der Gegenschneide 46 vorbeidrehenden Schneidkante eines Messers 38 bereit. Ein derartiger Sensor ist in der EP 0 943 888 A beschrieben, deren Lehre durch Verweis in die vorliegende Offenbarung aufgenommen wird. Beim Schleifen wird die Gegenschneide 46 durch die Steuerung 52 mittels der Stellmotore 58, 60 in eine Position verbracht, in der der magnetisch arbeitende Sensor 56 in der Lage ist, ein geeignetes Abstandssignal zu erzeugen. Die Steuerung 52 ist weiterhin mit einem Winkelsensor 62 verbunden, der eine Information über den aktuellen Drehwinkel der Welle 32 bereitstellt. Anhand des vom Winkelsensor 62 erzeugten Signals ist die Steuerung 52 in der Lage, zu erkennen, welches der jeweils in einem anderen Winkel auf der Welle 32 angeordneten Messer 38 sich gerade in der Nähe der Gegenschneide 46 befindet. Auf diese Weise ist eine Korrelation zwischen dem vom magnetisch arbeitenden Sensor 56 bereitgestellten Abstandsmesswert und der axialen Position des Messers 38 möglich. Die Steuerung 52 steuert die Bewegungseinrichtung 48 in Abhängigkeit von diesen Informationen in der oben beschriebenen Weise.

## Patentansprüche

1. Schleifvorrichtung, mit einem Schleifstein (42) zum Schleifen mindestens eines Messers (38) einer Häckseleinrichtung, einer Bewegungseinrichtung (48) zum Bewegen des Schleifsteins (42) entlang des Messers (38), einer Messeinrichtung zur Bereitstellung eines Signals, das eine Information über die Form der Schneidkante des Messers (38) in der Bewegungsrichtung des Schleifsteins (42) enthält, und einer Steuerung (52), die die Bewegungseinrichtung (48) in Abhängigkeit von dem von der Messeinrichtung bereitgestellten Signal steuert, **dadurch gekennzeichnet, dass** die Steuerung (52) betreibbar ist, die von der Messeinrichtung bereitgestellten Informationen über die Form der Schneidkante des Messers (38) in der Bewegungsrichtung des Schleifsteins (42) mit einer vorbestimmten und/oder vorgegebenen Sollform zu vergleichen und/oder zu prüfen, ob die Sollform erreicht ist und basierend auf dem Ergebnis die Bewegungseinrichtung (48) derart zu steuern, dass die Schneidkante des Messers (38) in die Sollform gebracht wird.

2. Schleifvorrichtung nach Anspruch 1, **dadurch gekennzeichnet, dass** die Häckseleinrichtung eine Häckseltrommel (22) und daran befestigte Messer (38) aufweist, dass die Häckseltrommel (22) auf einer sich beim Schleifen drehenden Welle (32) angeordnet ist, und dass die Messeinrichtung eine Information über den Radius des Hüllkreises der Messer (38) bereitstellt.

3. Schleifvorrichtung nach Anspruch 2, **dadurch gekennzeichnet, dass** die Steuerung (52) die Bewegungseinrichtung (48) derart steuert, dass sich eine im wesentlichen zur Welle (32) parallele Schneidkante der Messer (38) bzw. eine über die Breite der Häckseltrommel (22) betrachtet leicht konkave Form der Schneidkanten der Messer (38) ergibt.

4. Schleifvorrichtung nach einem der Ansprüche 2 bis 3, **dadurch gekennzeichnet, dass** die Bewegungseinrichtung (48) eingerichtet ist, den Schleifstein (42) über die Breite der Häckseltrommel (22) zu bewegen und/oder den Schleifstein (42) zum Messer (38) zuzustellen.

5. Schleifvorrichtung nach einem der Ansprüche 1 bis 4, **dadurch gekennzeichnet, dass** die Steuerung (52) die Bewegungseinrichtung (48) derart steuert, dass der Schleifstein (42) zeitlich nicht linear über die Breite der Häckseleinrichtung bewegt wird.

6. Schleifvorrichtung nach Anspruch 5, **dadurch gekennzeichnet, dass** die Steuerung (52) die Bewegungseinrichtung (48) derart steuert, dass der Schleifstein (42) jeweils an einer Position stehen bleibt, bis die Messeinrichtung ein dieser Position zugeordnetes Ausgangssignal erzeugt, das einem bestimmten Radius des Hüllkreises der Schneidkanten der Messer (38) entspricht, und dass der Schleifstein (42) danach von der Bewegungseinrichtung (48) weiter über die Breite der Häckseleinrichtung bewegt wird.

7. Schleifvorrichtung nach einem der Ansprüche 1 bis 5, **dadurch gekennzeichnet, dass** die Steuerung (52) die Bewegungseinrichtung (48) derart steuert, dass sie den Schleifstein (42) kontinuierlich über die Breite der Häckseleinrichtung verfährt.

8. Schleifvorrichtung nach Anspruch 6 oder 7, **dadurch gekennzeichnet, dass** ein weiterer Schleifvorgang durchgeführt wird, bei dem der Schleifstein (42) zugestellt wird, wenn die Sollform des Messers (38) erzielt ist.

9. Schleifvorrichtung nach einem der vorhergehenden Ansprüche, **dadurch gekennzeichnet, dass** die Steuerung (52) ein Fehlersignal bereitstellt, wenn die Schneidkante eines Messers (38) einen Abstand von einer Welle (32) oder den Schneidkanten der anderen Messer (38) aufweist, der über einem Schwellenwert liegt.

10. Schleifvorrichtung nach einem der vorhergehenden Ansprüche, **dadurch gekennzeichnet, dass** die Messeinrichtung eine Information über den Abstand zwischen dem Schleifstein (42) und der Schneidkante eines am Schleifstein (42) vorbeilaufenden Messers (38) erzeugt.

11. Schleifvorrichtung nach Anspruch 10, **dadurch gekennzeichnet, dass** die Messeinrichtung einen am Schleifstein (42) oder an einer Schleifsteinhalterung (40) angeordneten Klopfsensor (50) umfasst.

12. Schleifvorrichtung nach einem der Ansprüche 1 bis 9, **dadurch gekennzeichnet, dass** die Messeinrichtung einen an einer Gegenschneide (46) angeordneten Sensor, insbesondere einen Klopfsensor oder einen magnetisch arbeitenden Sensor (56) umfasst.

13. Erntemaschine, insbesondere selbstfahrender oder gezogener Feldhäcksler, mit einer Häckseleinrichtung und einer Schleifvorrichtung nach einem der Ansprüche 1 bis 12.

## Claims

1. A sharpening appliance with a grindstone (42) for sharpening at least one blade (38) of a chopping device, a moving device (48) for moving the grindstone (42) along the blade (38), a measuring device for providing a signal which comprises information regarding the form of the cutting edge of the blade (38) in the direction of movement of the grindstone (42), and a controller (52) which controls the moving device (48) in dependence on the signal provided by the measuring device, **characterized in that** the controller (52) is operable to compare the information regarding the form of the cutting edge of the blade (38) in the direction of movement of the grindstone (42) with a predetermined and/or specified desired form and/or to check whether the desired form has been reached and so to control the moving device (48) on the basis of the result that the cutting edge of the blade (38) is brought into the desired form.

2. A sharpening appliance according to claim 1, **characterized in that** the chopping device comprises a chopping drum (22) and blades (38) fixed thereon, **in that** the chopping drum (22) is arranged on a shaft (32) which rotates during sharpening and **in that** the measuring device provides information regarding the radius of the enveloping circle of the blades (38).

3. A sharpening appliance according to claim 2, **characterized in that** the controller (52) so controls the moving device (48) that there results a cutting edge of the blades (38) substantially parallel to the shaft (32) or a slightly concave form of the cutting edges of the blades (38) as regarded over the width of the chopping drum (22).

4. A sharpening appliance according to claim 2 or 3, **characterized in that** the moving device (48) is arranged to move the grindstone (42) over the width of the chopping drum (22) and/or to feed the grindstone (42) into the blade (38).

5. A sharpening appliance according to any of claims 1 to 4, **characterized in that** the controller (52) so controls the moving device (48) that the grindstone (42) is moved non-linearly with time over the width of the chopping device.

6. A sharpening appliance according to claim 5, **characterized in that** the controller (52) so controls the moving device (48) that the grindstone (42) remains at each position until the measuring device generates an output signal associated with this position which corresponds to a given radius of the enveloping circle of the cutting edges of the blades (38), and **in that** the grindstone (42) is then moved by the moving device (48) further along the width of the chopping device.

7. A sharpening appliance according to any of claims 1 to 5, **characterized in that** the controller (52) so controls the moving device (48) that it travels continuously over the width of the chopping device.

8. A sharpening appliance according to claim 6 or 7, **characterized in that** a further sharpening operation is carried out, in which the grindstone (42) is fed in, when the desired form of the blade (38) is attained.

9. A sharpening appliance according to any of the preceding claims, **characterized in that** the controller (52) provides an error signal when the cutting edge of a blade (38) has a spacing from a shaft (32) or the cutting edges of the other blades (38) which lies above a threshold value.

10. A sharpening appliance according to any of the preceding claims, **characterized in that** the measuring device generates information regarding the spacing between the grindstone (42) and the cutting edge of a blade (38) passing by the grindstone (42).

11. A sharpening appliance according to claim 10, **characterized in that** the measuring device comprises a knock sensor (50) on the grindstone (42) or on a grindstone holder (40).

12. A sharpening appliance according to any of claims 1 to 9, **characterized in that** the measuring device comprises a sensor arranged on a shear bar (46), especially a knock sensor or a magnetically operating sensor (56).

13. A harvesting machine, especially a self-propelled forage harvester, with a chopping device and a sharpening appliance according to any of claims 1 to 12.

## Revendications

1. Dispositif d'affûtage, avec une pierre à aiguiser (42) pour affûter au moins un couteau (38) d'un dispositif de hachage, un dispositif de déplacement (48) pour déplacer la pierre à aiguiser (42) le long du couteau (38), un dispositif de mesure pour la production d'un signal, qui contient une information sur la forme de l'arête de coupe du couteau (38) dans la direction de déplacement de la pierre à aiguiser (42), et une commande (52), qui commande le dispositif de déplacement (48) en fonction du signal produit par le dispositif de mesure, **caractérisé en ce que** la commande (52) peut être exploitée pour comparer les informations fournies par le dispositif de mesure sur la forme de l'arête de coupe du couteau (38) dans la direction de déplacement de la pierre à aiguiser (42) avec une forme de consigne prédéterminée et/ou prédéfinie pour comparer et/ou pour contrôler si la forme de consigne est obtenue et, en se basant sur le résultat, de commander le dispositif de déplacement (48) de telle façon que l'arête de coupe du couteau (38) soit amenée à la forme de consigne.

2. Dispositif d'affûtage selon la revendication 1, **caractérisé en ce que** le dispositif de hachage présente un tambour de hachage (22) et des couteaux (38) fixés à celui-ci, **en ce que** le tambour de hachage (22) est disposé sur un arbre (32) tournant lors de l'affûtage, et **en ce que** le dispositif de mesure produit une information sur le rayon du cercle enveloppe des couteaux (38).

3. Dispositif d'affûtage selon la revendication 2, **caractérisé en ce que** la commande (52) commande le dispositif de déplacement (48) de telle façon qu'il se forme une arête de coupe des couteaux (38) sensiblement parallèle à l'arbre (32), respectivement une forme légèrement concave, considérée sur la largeur du tambour de hachage (22), des arêtes de coupe des couteaux (38).

4. Dispositif d'affûtage selon l'une des revendications 2 à 3, **caractérisé en ce que** le dispositif de déplacement (48) est monté de façon à déplacer la pierre à aiguiser (42) sur la largeur du tambour de hachage (22) et/ou d'approcher la pierre à aiguiser (42) du couteau (38).

5. Dispositif d'affûtage selon l'une quelconque des revendications 1 à 4, **caractérisé en ce que** la commande (52) commande le dispositif de déplacement (48) de telle façon que la pierre à aiguiser (42) soit déplacée de façon non linéaire avec le temps sur la largeur du dispositif de hachage.

6. Dispositif d'affûtage selon la revendication 5, **caractérisé en ce que** la commande (52) commande le dispositif de déplacement (48) de telle façon que la pierre à aiguiser (42) reste chaque fois dans une position jusqu'à ce que le dispositif de mesure produise un signal de sortie associé à cette position, qui correspond à un rayon déterminé du cercle enveloppe des arêtes de coupe des couteaux (38), et **en ce que** la pierre à aiguiser (42) est ensuite déplacée par le dispositif de déplacement (48) plus loin sur la largeur du dispositif de hachage.

7. Dispositif d'affûtage selon l'une quelconque des revendications 1 à 5, **caractérisé en ce que** la commande (52) commande le dispositif de déplacement (48) de telle façon qu'il déplace la pierre à aiguiser (42) en continu sur la largeur du dispositif de hachage.

8. Dispositif d'affûtage selon la revendication 6 ou 7, **caractérisé en ce que** l'on exécute une autre opération d'affûtage dans laquelle la pierre à aiguiser (42) est approchée lorsque la forme de consigne du couteau (38) est atteinte.

9. Dispositif d'affûtage selon l'une quelconque des revendications précédentes, **caractérisé en ce que** la commande (52) produit un signal d'erreur lorsque l'arête de coupe d'un couteau (38) présente une distance par rapport à un arbre (32) ou aux arêtes de coupe des autres couteaux (38), qui se situe au-delà d'une valeur de seuil.

10. Dispositif d'affûtage selon l'une quelconque des revendications précédentes, **caractérisé en ce que** le dispositif de mesure produit une information sur la distance entre la pierre à aiguiser (42) et l'arête de coupe d'un couteau (38) se déplaçant devant la pierre à aiguiser (42).

11. Dispositif d'affûtage selon la revendication 10, **caractérisé en ce que** le dispositif de mesure comprend un détecteur de coups (50) disposé sur la pierre à aiguiser (42) ou sur un support de pierre à aiguiser (40).

12. Dispositif d'affûtage selon l'une quelconque des revendications 1 à 9, **caractérisé en ce que** le dispositif de mesure comprend un détecteur disposé sur une contre-lame (46), en particulier un détecteur de coups ou un détecteur à action magnétique (56).

13. Moissonneuse, en particulier ramasseuse-hacheuse automobile ou remorquée, avec un dispositif de hachage et un dispositif d'affûtage selon l'une quelconque des revendications 1 à 12.
